# EUROPEAN PATENT APPLICATION

(11) **EP 4 614 901 A1**
(43) Date of publication of application: **10.09.2025**
(21) Application number: 22964064.4
(22) Date of filing: 04.11.2022
(51) Int. Cl.: H04L 27/00

(54) **METHOD FOR WIRELESS COMMUNICATION, AND TERMINAL DEVICE**

(71) Applicant: GUANGDONG OPPO MOBILE TELECOMMUNICATIONS CORP., LTD., Dongguan, Guangdong 523860 (CN)
(72) Inventor: ZHANG, Shichang, Dongguan, Guangdong 523860 (CN); MA, Teng, Dongguan, Guangdong 523860 (CN)
(74) Representative: RGTH
(86) International application number: PCT/CN2022/130005
(87) International publication number: WO 2024/092758

(57) **Abstract**

Provided are a method for wireless communication, and a terminal device. The method comprises: a terminal device determining first configuration information, wherein the first configuration information is used for configuring a sidelink positioning reference signal (SL PRS) resource in a resource pool. In the embodiments of the present application, a terminal device can determine configuration information for configuring an SL PRS resource in a resource pool, which aids the terminal device in determining, during the selection of the SL PRS resource, a resource unit used when resource exclusion is executed.

## Description

### TECHNICAL FIELD

This application relates to the field of communications technologies, and more specifically, to a method for wireless communication and a terminal device.

### BACKGROUND

Currently, in the second mode of the resource selection mode, a terminal device performs resource exclusion by using a single slot resource as a resource unit. In other words, each element in a candidate resource set obtained after resource exclusion is a single slot resource. However, in a process of selecting a sidelink reference signal (sidelink positioning reference signal, SL PRS) resource, how the terminal device determines a resource unit when performing resource exclusion is a problem to be solved.

### SUMMARY

This application provides a method for wireless communication and a terminal device. The following describes the aspects related to this application.

According to a first aspect, a wireless communication method is provided, and the method includes: determining, by a terminal device, first configuration information, where the first configuration information is used for configuring a sidelink positioning reference signal SL PRS resource in a resource pool.

According to a second aspect, a terminal device is provided, and the terminal device includes: a processing unit, configured to determine first configuration information, where the first configuration information is used for configuring a sidelink positioning reference signal SL PRS resource in a resource pool.

According to a third aspect, a terminal device is provided, and the terminal device includes a processor, a memory, and a communications interface. The memory is configured to store one or more computer programs, and the processor is configured to invoke the computer program in the memory to cause the terminal device to execute some or all of the steps in the method according to the first aspect.

According to a fourth aspect, an embodiment of this application provides a communications system, where the system includes the terminal device and/or the network device described above. In another possible design, the system may further include another device interacting with the terminal device in the solution provided in embodiments of the present application.

According to a fifth aspect, an embodiment of this application provides a computer-readable storage medium. The computer-readable storage medium stores a computer program, and the computer program causes a communications device (for example, a terminal device or a network device) to execute some or all of the steps in the method according to the foregoing aspects.

According to a sixth aspect, an embodiment of this application provides a computer program product. The computer program product includes a non-transitory computer-readable storage medium that stores a computer program. The computer program is operable to cause a communications device (for example, a terminal device or a network device) to execute some or all of the steps in the method according to the foregoing aspects. In some implementations, the computer program product may be a software installation package.

According to a seventh aspect, an embodiment of this application provides a chip. The chip includes a memory and a processor, and the processor may invoke a computer program from the memory and run the computer program, to implement some or all of the steps of the methods according to the foregoing aspects.

In embodiments of this application, a terminal device may determine configuration information (also referred to as "first configuration information") for configuring an SL PRS resource in a resource pool, which helps the terminal device determine, during selection of the SL PRS resource, a resource unit used during resource exclusion.

### BRIEF DESCRIPTION OF DRAWINGS

FIG. 1 is an example diagram of a system architecture of a wireless communications system to which embodiments of this application are applicable.
FIG. 2 is an example diagram of a scenario of sidelink communication within network coverage.
FIG. 3 is an example diagram of a scenario of sidelink communication with partial network coverage.
FIG. 4 is an example diagram of a scenario of sidelink communication outside network coverage.
FIG. 5 is an example diagram of a scenario of sidelink communication based on a central control node.
FIG. 6 is an example diagram of a broadcast-based sidelink communication manner.
FIG. 7 is an example diagram of a unicast-based sidelink communication manner.
FIG. 8 is an example diagram of a multicast-based sidelink communication manner.
FIG. 9 is a schematic diagram of sidelink resource selection in a second mode.
FIG. 10 is a schematic diagram of a resource for transmitting a DL PRS.
FIG. 11 is a schematic diagram of an SL PRS resource according to an embodiment of this application.
FIG. 12 is a schematic diagram of an SL PRS resource according to another embodiment of this application.
FIG. 13 is a schematic flowchart of a wireless communication method according to an embodiment of this application.
FIG. 14 is a schematic diagram of a terminal device according to an embodiment of this application.
FIG. 15 is a schematic structural diagram of a communications apparatus according to an embodiment of this application.

### DESCRIPTION OF EMBODIMENTS

Technical solutions in this application are described below with reference to the accompanying drawings.

### Communications system architecture

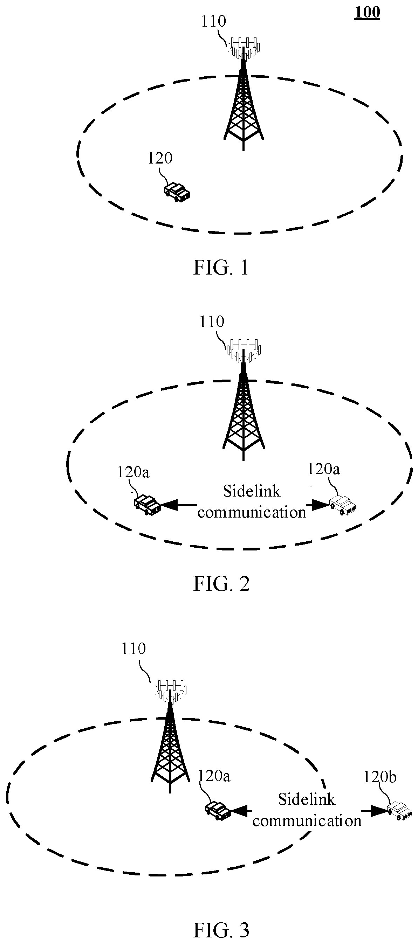

FIG. 1 is an example diagram of a system architecture of a wireless communications system 100 to which an embodiment of this application is applicable. The wireless communications system 100 may include a network device 110 and a terminal device 120. The network device 110 may be a device that communicates with the terminal device 120. The network device 110 may provide communication coverage for a specific geographic area, and may communicate with the terminal device 120 located within the coverage.

FIG. 1 shows one network device and one terminal device as an example. Optionally, the wireless communications system 100 may include one or more network devices 110, and/or one or more terminal devices 120. For one network device 110, the one or more terminal devices 120 may be located within network coverage of the network device 110, or may be located outside network coverage of the network device 110, or may be located partially within network coverage of the network device 110, and partially outside the network coverage of the network device 110, which is not limited in embodiments of this application.

Optionally, the wireless communications system 100 may further include another network entity such as a network controller or a mobility management entity, which is not limited in embodiments of this application.

It should be understood that the technical solutions of embodiments of this application may be applied to various communications systems, such as a 5th generation (5th generation, 5G) system or a new radio (new radio, NR) system, a long-term evolution (long term evolution, LTE) system, an LTE frequency division duplex (frequency division duplex, FDD) system, and an LTE time division duplex (time division duplex, TDD) system. The technical solutions provided in this application may further be applied to a future communications system, such as a 6th generation mobile communications system or a satellite communications system.

The terminal device in embodiments of this application may also be referred to as a user equipment (user equipment, UE), an access terminal, a subscriber unit, a subscriber station, a mobile site, a mobile station (mobile station, MS), a mobile terminal (mobile terminal, MT), a remote station, a remote terminal device, a mobile device, a user terminal, a wireless communications device, a user agent, or a user apparatus. The terminal device in embodiments of this application may be a device providing a user with voice and/or data connectivity and capable of connecting people, objects, and machines, such as a handheld device or vehicle-mounted device having a wireless connection function. The terminal device in embodiments of this application may be a mobile phone (mobile phone), a tablet computer (Pad), a notebook computer, a palmtop computer, a mobile internet device (mobile internet device, MID), a wearable device, a vehicle, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in smart city (smart city), a wireless terminal in smart home (smart home), or the like. For example, the terminal device may act as a scheduling entity that provides a sidelink signal between terminal devices in vehicle-to-everything (vehicle-to-everything, V2X), device-to-device (device-to-device, D2D) communications, or the like. For example, a cellular phone and a vehicle communicate with each other through a sidelink signal. A cellular phone and a smart home device communicate with each other, without relaying a communication signal through a base station. Optionally, the terminal device may be configured to function as a base station.

The network device in embodiments of this application may be a device configured to communicate with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may broadly cover devices having the following various names, or may be interchanged with the devices having following names, such as a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a master MeNB, a secondary SeNB, a multi-standard radio (MSR) node, a home base station, a network controller, an access node, a wireless node, an access point (access piont, AP), a transmission node, a transceiver node, a baseband unit (base band unit, BBU), a remote radio unit (Remote Radio Unit, RRU), an active antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node, or the like, or a combination thereof. Alternatively, the base station may be a communications module, a modem, or a chip disposed in the device or apparatus described above. Alternatively, the base station may be a mobile switching center, a device that functions as a base station in device-to-device D2D, V2X, or machine-to-machine (machine-to-machine, M2M) communications, a network-side device in a 6G network, a device that functions as a base station in a future communications system, or the like. The base station may support networks with a same access technology or different access technologies. A specific technology and a specific device form used by the network device are not limited in embodiments of this application.

The base station may be a fixed or mobile base station. For example, a helicopter or an unmanned aerial vehicle may be configured to act as a mobile base station, and one or more cells may move based on a position of the mobile base station. In another example, a helicopter or an unmanned aerial vehicle may be configured to serve as a device in communication with another base station.

In some deployments, the network device in embodiments of this application may be a CU or a DU, or the network device includes a CU and a DU. The gNB may further include an AAU.

The network device and the terminal device may be deployed on land, including being indoors or outdoors, handheld, or vehicle-mounted, may be deployed on a water surface, or may be deployed on a plane, a balloon, or a satellite in the air. In embodiments of this application, a scenario of the network device and the terminal device is not limited.

### Sidelink communication in different network coverage statuses

Sidelink communication means a sidelink-based communication technology. The sidelink communication may be, for example, device to device (device to device, D2D) or vehicle to everything (vehicle to everything, V2X) communication. Communication data in a conventional cellular system is received or transmitted between a terminal device and a network device, while sidelink communication supports direct communication data transmission between terminal devices. Compared with conventional cellular communication, direct transmission of communication data between terminal devices may have higher spectral efficiency and a lower transmission delay. For example, a vehicle-to-everything system uses a sidelink communication technology.

Sidelink communication may be classified, depending on a network coverage status of the terminal device, into sidelink communication within network coverage, sidelink communication with partial network coverage, and sidelink communication outside network coverage.

FIG. 2 is an example diagram of a scenario of sidelink communication within network coverage. In the scenario shown in FIG. 2, two terminal devices 120a are both located within coverage of a network device 110. Therefore, both the two terminal devices 120a may receive configuration signalling (where the configuration signalling in this application may alternatively be replaced with configuration information) from the network device 110, and determine a sidelink configuration based on the configuration signalling from the network device 110. After performing sidelink configuration, both the two terminal devices 120a may perform sidelink communication on a sidelink.

FIG. 3 is an example diagram of a scenario of sidelink communication with partial network coverage. In the scenario shown in FIG. 3, a terminal device 120a performs sidelink communication with a terminal device 120b. The terminal device 120a is located within coverage of a network device 110. Therefore, the terminal device 120a can receive configuration signalling from the network device 110, and determine a sidelink configuration based on the configuration signalling from the network device 110. The terminal device 120b is located outside network coverage, and cannot receive the configuration signalling from the network device 110. In this case, the terminal device 120b may determine a sidelink configuration based on pre-configuration (pre-configuration) information and/or information that is carried on a physical sidelink broadcast channel (physical sidelink broadcast channel, PSBCH) and that is transmitted by the terminal device 120a located within the network coverage. After performing sidelink configuration, both the terminal device 120a and the terminal device 120b may perform sidelink communication on a sidelink.

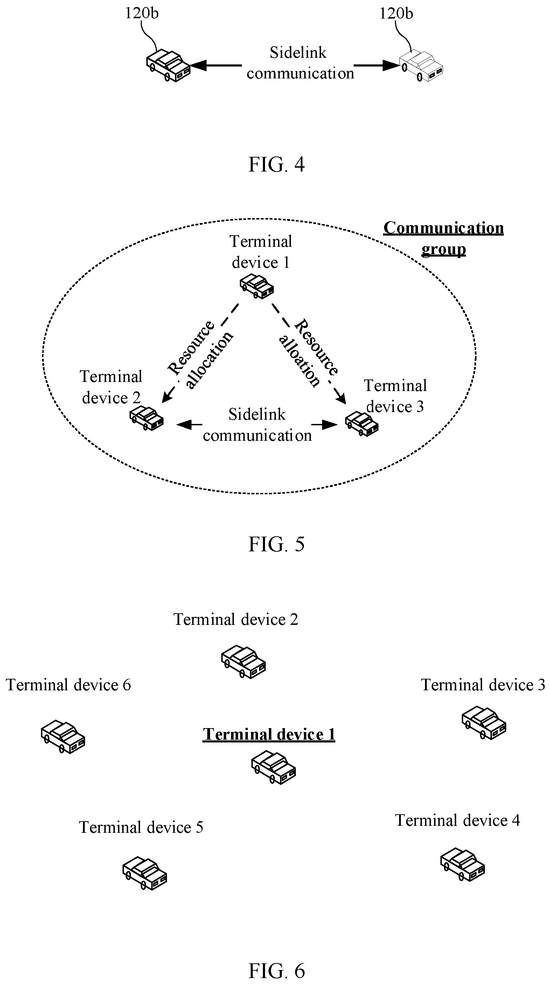

FIG. 4 is an example diagram of a scenario of sidelink communication outside network coverage. In the scenario shown in FIG. 4, two terminal devices 120b are both located outside network coverage. In this case, both the two terminal devices 120b may determine a sidelink configuration based on pre-configuration information. After performing sidelink configuration, both the two terminal devices 120b may perform sidelink communication on a sidelink.

### Sidelink communication based on a central control node

FIG. 5 is an example diagram of a scenario of sidelink communication based on a central control node. In the scenario of sidelink communication, a plurality of terminal devices may form a communication group, and the communication group has a central control node. The central control node may be a terminal device (for example, a terminal device 1 in FIG. 5) in the communication group, and the terminal device may also be referred to as a cluster header (cluster header, CH) terminal device. The central control node may be responsible for implementing one or more of the following functions: establishing a communication group, adding a group member to or deleting a group member from a communication group, coordinating resources within a communication group, allocating sidelink transmission resources to another terminal device, receiving sidelink feedback information from another terminal device, and coordinating resources with another communication group.

### Mode of sidelink communication

Two sidelink communication modes (also referred to as "resource selection modes") are defined in some standards or protocols (for example, the 3rd Generation Partnership Project (3rd Generation Partnership Project, 3GPP)): a first mode and a second mode.

In the first mode, a resource (the resource mentioned in this application may also be referred to as a transmission resource, such as a time-frequency resource) of a terminal device is allocated by a network device. The terminal device may transmit data on a sidelink based on the resource allocated by the network device. The network device may allocate, to the terminal device, a resource for single transmission; or may allocate, to the terminal device, a resource for semi-static transmission. The first mode may be applied to a scenario in which there is coverage of the network device, for example, the scenario shown in FIG. 2. In the scenario shown in FIG. 2, the terminal device 120a is located within network coverage of the network device 110. Therefore, the network device 110 may allocate, to the terminal device 120a, a resource used in a sidelink transmission process.

In the second mode, the terminal device may independently select one or more resources from a resource pool (resource pool, RP). Then, the terminal device may perform sidelink transmission based on a selected resource. For example, in the scenario shown in FIG. 4, the terminal device 120b is located outside cell coverage. Therefore, the terminal device 120b may independently select a resource from a preconfigured resource pool to perform sidelink transmission. Alternatively, in the scenario shown in FIG. 2, the terminal device 120a may independently select one or more resources from a resource pool configured by the network device 110 to perform sidelink transmission.

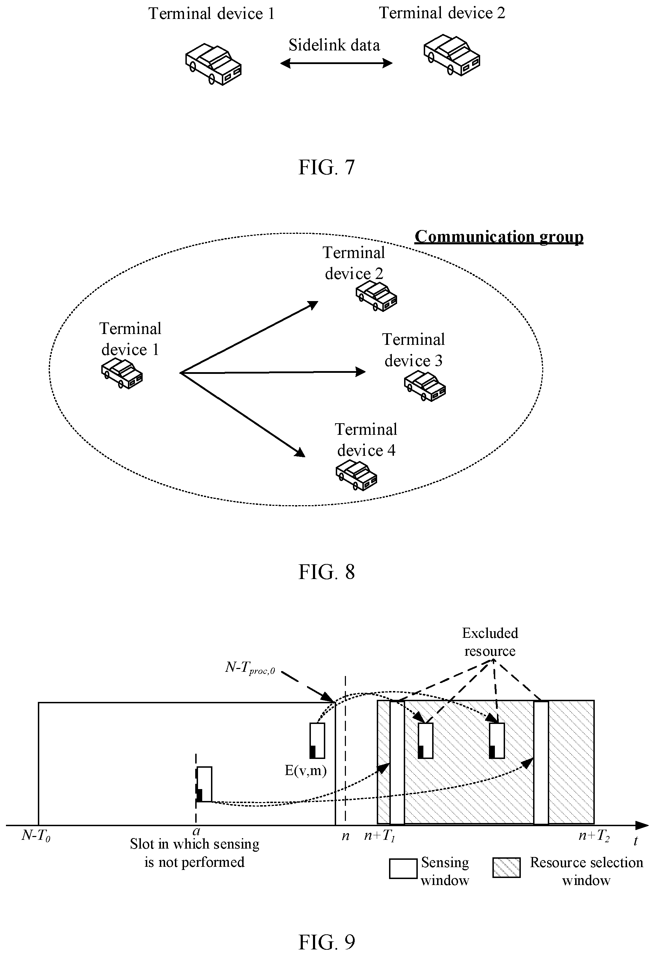

For ease of understanding, the following describes the second mode with reference to FIG. 9. As shown in FIG. 9, a terminal device triggers resource selection or resource reselection at a slot n, and a resource selection window starts from n+T₁ and ends at n+T₂. Herein 0 ≤ T₁ ≤ T_{proc,1}; and when a subcarrier spacing is 15 kHz, 30 kHz, 60 kHz, or 120 kHz, T_{proc,1} denotes 3 slots, 5 slots, 9 slots, or 17 slots, respectively. If T₂ₘᵢₙ is less than a remaining delay budget of a service, T₂ₘᵢₙ ≤ T₂ ≤ the remaining delay budget of the service; otherwise, T₂ is equal to a remaining packet delay budget (packet delay budget, PDB) in the unit of slot. A value set of T₂ₘᵢₙ is {1, 5, 10, 20}*2^{µ} slots, where µ = 0, 1, 2, or 3 correspond to a case in which the subcarrier spacing is 15, 30, 60, or 120 kHz, and the terminal device determines T₂ₘᵢₙ from the value set based on a priority of data to be transmitted by the terminal device. Herein [n+T1, n+T2] may be referred to as the resource selection window.

The terminal device performs resource sensing from n-T₀ to n-T_{proc,0}, and a value of T₀ is 100 or 1,100 milliseconds. When the subcarrier spacing is 15 kHz, 30 kHz, 60 kHz, or 120 kHz, T_{proc,0} is 1 slot, 1 slot, 2 slots, or 4 slots, respectively. Herein [n-T₀ to n-T_{proc,0}] is referred to as a resource sensing window.

In some implementations, the second mode is performed according to the following two steps.

Step 1: A physical layer of the terminal device may exclude a resource unsuitable for sidelink transmission from a resource selection window based on a channel sensing result.

The terminal device uses all available resources, in the resource selection window, belonging to a resource pool used by the terminal device as a resource set A, and any resource in the set A is denoted as R (x, y), where x and y respectively denote a frequency domain position and a time domain position of a resource, and R (x, y) indicate a resource formed by consecutive L_subch sub-channels starting from a sub-channel x in the slot y. An initial quantity of resources in the resource set A is denoted as Mₜₒₜₐₗ.

Step 1-1: If the terminal device transmits data in a slot a in a sensing window instead of sensing, the terminal device determines whether a slot a+q*Prxlg overlaps with a resource R(x, y+j *Ptxlg). If they overlap, the resource R (x, y) is excluded from the resource set A. Herein, j = 0, 1, 2, 3... C-1, where C is determined by using a random number value generated by the terminal device. Ptxlg denotes a quantity of logical slots converted from resource reservation periods Ptx of the terminal device. Prxlg is a quantity of logical slots converted from Prx, where Prx is any resource reservation period allowed in the resource pool. If Prx < Tscal and n - m <= Prxlg, then Q = [Tscal/Prx]; otherwise Q = 1. Tscal is equal to a value of T₂ in the unit of millisecond.

Step 1-2: If the terminal device detects first sidelink control information transmitted in a PSCCH on a v^{th} frequency domain resource E(v, m) in a slot m in the sensing window, the terminal device measures a sidelink reference signal received power (sidelink reference signal receiving power, SL-RSRP) of the PSCCH or an SL-RSRP of a PSSCH scheduled by the PSCCH (namely, an SL-RSRP of a PSSCH corresponding to the PSCCH and transmitted in a same slot as the PSCCH). If a measured SL-RSRP is greater than an SL-RSRP threshold, and a resource reservation between TB is activated in the resource pool used by the terminal device, the terminal device assumes receiving the first sidelink control information of the same content on a slot m+q*Prxlg. Herein q = 1, 2, 3... Q, and if Prx < Tscal and n - m <= Prxlg, then Q = [Tscal/Prx]; otherwise Q = 1. Tscal is equal to a value of T₂ in the unit of millisecond. Prxlg is a quantity of logical slots converted from Prx, where Prx is a resource reservation period indicated by resource reservation period ("resource reservation period") in the first sidelink control information transmitted in the PSCCH detected by the terminal device. The terminal device will determine whether resources indicated in time resource assignment (time resource assignment) and frequency resource assignment (frequency resource assignment) fields of the Q pieces of first sidelink control information assumed to be received and the first sidelink control information received in the slot m overlap with the resource R (x, y+j*Ptxlg). If they overlap, the corresponding resource R (x, y) is excluded from the set A. Herein j = 0, 1, 2, 3...C-1, where C is determined by using a value of a random counter generated by the terminal device. Ptxlg is a quantity of logical slots converted from Ptx, and Ptx is a resource reservation period determined by the terminal device performing the resource selection.

The RSRP threshold is determined by a priority P1 carried in the PSCCH detected by the terminal device and a priority P2 of data to be transmitted by the terminal device. A configuration of the resource pool used by the terminal device includes an SL-RSRP threshold table, and the SL-RSRP threshold table includes SL-RSRP thresholds corresponding to all priority combinations. The configuration of the resource pool may be configured by a network device or preconfigured. If a quantity of remaining resources in the resource set A subjected to the resource exclusion is less than Mₜₒₜₐₗ*X%, the SL-RSRP threshold is raised by 3dB and step 1 is performed again. Possible values of X are {20, 35, 50}. The configuration of the resource pool used by the terminal device includes a correspondence between priorities and the possible values of X. The terminal device determines a value of X based on the correspondence and a priority of data to be transmitted.

The physical layer of the terminal device reports the resource set A subjected to the resource exclusion as a candidate resource set to a higher layer, for example, a medium access control (media access control, MAC) layer of the terminal device.

Step 2: The MAC layer of the terminal device randomly selects a resource from the reported candidate resource set to transmit data. In other words, the terminal device randomly selects a resource from the candidate resource set to transmit data.

### Data transmission modes of sidelink communication

Some sidelink communications systems (such as long term evolution vehicle to everything (long term evolution vehicle to everything, LTE-V2X)) support a broadcast-based data transmission mode (briefly referred to as broadcast transmission below). For the broadcast transmission, a receive-end terminal may be any terminal device around a transmit-end terminal. For example, in FIG. 6, a terminal device 1 is a transmit-end terminal, and a receive-end terminal corresponding to the transmit-end terminal is any terminal device around the terminal device 1, for example, may be a terminal device 2 to a terminal device 6 in FIG. 6.

In addition to the broadcast transmission, some communications systems also support a unicast-based data transmission mode (referred to as unicast transmission for short) and/or a multicast-based data transmission mode (referred to as multicast transmission for short). For example, new radio vehicle to everything (new radio vehicle to everything, NR-V2X) expects to support autonomous driving. Autonomous driving poses higher requirements for data interaction between vehicles. For example, data interaction between vehicles requires a higher throughput, a lower delay, higher reliability, larger coverage, a more flexible resource allocation manner, and the like. Therefore, to improve performance of data interaction between vehicles, NR-V2X introduces unicast transmission and multicast transmission.

For the unicast transmission, the receive-end terminal usually includes only one terminal device. For example, in FIG. 7, unicast transmission is performed between a terminal device 1 and a terminal device 2. The terminal device 1 may be a transmit-end terminal, and the terminal device 2 may be a receive-end terminal. Alternatively, the terminal device 1 may be a receive-end terminal, and the terminal device 2 may be a transmit-end terminal.

For the multicast transmission, the receive-end terminal may be terminal devices in a communication group, or the receive-end terminal may be terminal devices within a specific transmission distance. For example, in FIG. 8, a terminal device 1, a terminal device 2, a terminal device 3, and a terminal device 4 constitute a communication group. If the terminal device 1 transmits data, all the other terminal devices (the terminal device 2 to the terminal device 4) in the group may be receive-end terminals.

### Downlink-based positioning

In downlink-based positioning, a network device may provide a downlink positioning reference signal (downlink positioning reference signal, DL PRS) configuration of four positioning frequency layers (frequency layer) for a terminal device. The following DL PRS configuration parameters are provided in a parameter structure of each positioning frequency layer: a subcarrier spacing of a DL PRS; a cyclic prefix (cyclic prefix, CP) length of a DL PRS; a frequency domain resource bandwidth of a DL PRS; a frequency domain start frequency position of a DL PRS resource; a frequency domain reference point "Point A" of a DL PRS; and a comb size "Comb-N" of a DL PRS.

A value of the frequency domain resource bandwidth of the DL PRS may be a quantity of physical resource blocks (physical resource blocks, PRBs) allocated to the DL PRS. In some cases, a minimum value of the frequency domain resource bandwidth of the DL PRS may be 24 PRBs, with a granularity of 4 PRBs. A maximum value of the frequency domain resource bandwidth of the DL PRS may be 272 PRBs.

The frequency domain start frequency position of the DL PRS resource is used to indicate an index number of a start PRB of the DL PRS in frequency domain resource allocation. An index number of a PRB is defined in relative to a frequency domain reference point "Point A" of the DL PRS.

The foregoing DL PRS configuration parameters corresponding to a respective positioning frequency layer may be applied to all DL PRS resources included in the positioning frequency layer. In other words, in a positioning frequency layer, all DL PRSs from a plurality of different TRPs may use a same subcarrier spacing, a same CP length, and a same comb size, be sent on a same frequency subband, and occupy a same bandwidth. Such a design allows the terminal device to simultaneously receive and measure DL PRSs from a plurality of different TRPs on a same frequency.

In some scenarios, parameters of a TRP layer also include the DL PRS configuration parameters. The parameters of the TRP layer may include a parameter for uniquely identifying and locating a TRP, such as a physical cell ID of the TRP, an NR cell global identifier (NCGI) of the TRP, or an absolute radio frequency channel number (absolute radio frequency channel number, ARFCN) of the TRP. Usually, a maximum of two DL PRS resource sets may be configured in each TRP layer. For each DL PRS resource set, the DL PRS configuration parameters in the parameters of the TRP layer include: a DL PRS resource set identity (represented by "nr-DL-PRS-ResourceSetID"); a transmission periodicity and slot offset of a DL PRS (represented by "dl-PRS-Periodicity-and-ResourceSetSlotOffset"); a repetition factor of a DL PRS resource (represented by "dl-PRS-ResourceRepetitionFactor"); a time gap for re-transmission of a DL PRS resource (represented by "dl-PRS-ResourceTimeGap"); a DL PRS muting (muting) configuration; and a number (represented by "dl-PRS-NumSymbols") of orthogonal frequency division multiplexing (orthogonal frequency division multiplexing, OFDM) symbols (briefly referred to as "symbols" below) occupied by the DL PRS resource.

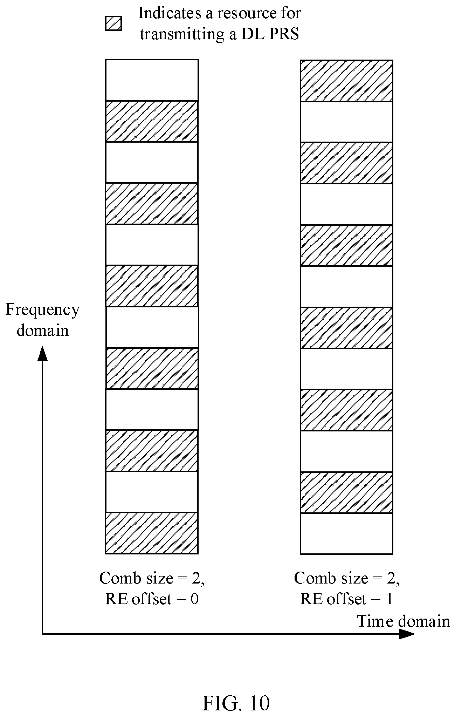

The transmission period and slot offset of a DL PRS are used for indicating time domain sending behavior of all DL PRS resources in the DL PRS resource set. In some implementations, a minimum value of a configurable DL PRS transmission period is 4 milliseconds, and a maximum value of a configurable DL PRS transmission period is 10,240 milliseconds. Currently, configuration of a DL PRS supports flexible subcarrier spacings: including 15 kHz, 30 kHz, 60 kHz, and 120 kHz. In the case of different subcarrier spacings, the configurable DL PRS transmission period may have a same value range. FIG. 10 is a schematic diagram showing resources for transmitting a DL PRS in a case that a comb size is 2 and RE offsets are 0 and 1 respectively.

A repetition factor of the DL PRS resource is used to indicate a number of repetitions of transmission of a DL PRS resource in each DL PRS transmission period. Currently, repetitions of transmission of a same DL PRS resource may be used by the terminal device to aggregate DL PRS energy of a plurality of transmissions, which facilitates increasing a coverage distance of a DL PRS and improving positioning precision. In an FR2 system, repetition of transmission of the DL PRS resource may also be used by the terminal device to perform receive beam sweeping operations. The terminal device may use different receive beams to receive repetitions of transmission of a same DL PRS resource, so as to find an optimal TRP transmit beam matching the receive beam of the terminal device. However, repetitions of transmission of the DL PRS resource increase DL PRS transmission overheads. Currently, in order to control the transmission overheads, the repetition factor of the DL PRS resource is set to 1, 2, 4, 6, 8, 16, or 32 in the 3GPP NR R16 specification.

A time gap for repetitions of transmission of the DL PRS resource is used to indicate a quantity of slots between consecutive two repetitions of transmission of a same DL PRS resource.

The DL PRS muting configuration is used to indicate that a DL PRS is not transmitted on some allocated time-frequency resources. The muting configuration may be understood as follows: ADL PRS is not transmitted on all allocated time-frequency resources, and is intentionally not transmitted on some designated time-frequency resources. The muting configuration can avoid a conflict between a DL PRS and another signal (such as a synchronization signal block (synchronization signal block, SSB)). Further, the muting configuration can avoid interference between signals transmitted by different TRPs. For example, the muting configuration can be used to instruct a TRP that is closer to the terminal device not to transmit a DL PRS, and configure a TRP that is farther away from the terminal device to transmit a DL PRS. In this way, the terminal device may not be interfered by a TRP that is indicated to be muted, but receives a DL PRS from the farther TRP.

A quantity of OFDM symbols occupied by the DL PRS resource is used to indicate a quantity of OFDM symbols allocated to one DL PRS resource in one slot.

Generally, DL PRS configuration parameters included in the parameters of the TRP layer may be applied to all DL PRS resources in a DL PRS resource set corresponding to the TRP layer. Therefore, in DL PRS resources belonging to a same DL PRS resource set, DL PRSs are transmitted in a same transmission period with a same number of repetitions of transmission, and the DL PRSs occupy a same quantity of OFDM symbols.

In some implementations, for each DL PRS resource, the DL PRS configuration parameters may further include: a DL PRS resource identity ID (represented by "nr-DL-PRS-ResourceID"); a DL PRS sequence ID (represented by "dl-PRS-SequenceID"); a start frequency domain resource unit offset of a DL PRS (represented by "dl-PRS-CombSizeN-AndReOffset"); a DL PRS resource slot offset (represented by "dl-PRS-ResourceSlotOffset"); a DL PRS OFDM symbol offset (represented by "dl-PRS-ResourceSymbol Offset"); and DL PRS quasi co-location (Quasi Co-Location, QCL) information (represented by "dl-PRS-QCL-Info").

The start frequency domain resource unit offset of a DL PRS is used to indicate a frequency domain resource unit offset value used for resource mapping on a 1^{st} allocated OFDM symbol of the DL PRS resource in one slot. Generally, based on this parameter and a relative offset value defined in TS 38.211, the terminal device may determine, for each OFDM symbol, a frequency domain resource unit offset value used for resource mapping on a respective OFDM symbol.

The DL PRS resource slot offset is used to indicate a slot offset relative to a DL PRS resource set. This parameter may be used to determine a slot position of a respective DL PRS resource.

The DL PRS OFDM symbol offset is used to indicate a time-frequency resource allocation position of a DL PRS resource in one slot. This parameter may be used to indicate an index number of a start OFDM symbol in a slot.

The DL PRS QCL information is used to indicate QCL information of a DL PRS.

### Sidelink-based positioning

The sidelink-based positioning is one of enhancement schemes of positioning technologies in R18. In this topic, scenarios and requirements of use cases supporting NR positioning within, partially within, and outside coverage of a cellular network are considered. Positioning requirements of V2X use cases, public safety use cases, commercial use cases, and industrial internet of things (industrial internet of things, IIOT) use cases are considered. In addition, support for the following functions is considered: absolute positioning, ranging/direction measurement, and relative positioning; studying a positioning method combining sidelink measurement quantities and Uu interface measurement quantities; studying sidelink positioning reference signals, including signal design, physical layer control signaling, resource allocation, physical layer measurement quantities, related physical layer processes and the like; and studying positioning system architectures and signaling processes, such as configuration and measurement reporting.

For absolute positioning, the terminal device may directly determine, based on a measurement result, an absolute geographic location of the terminal device, or referred to as terminal device-based absolute positioning. Alternatively, the terminal device may report the measurement result to a positioning server, such as LMF, and then the LMF calculates the absolute location of the terminal device and notifies the terminal device of the absolute location. Such a manner is referred to as terminal device-assisted absolute positioning. For ranging/direction measurement or relative positioning, the terminal device may estimate information such as a signal round-trip time, an arrival angle, and signal reception strength based on a received positioning reference signal, and estimate a relative distance and a relative direction.

As described above, it is currently expected to enhance a positioning technology by introducing sidelink-based positioning. For ease of understanding of this application, a time domain position of an SL PRS resource in a sidelink communications system in embodiments of this application is first described below.

It is assumed that a time domain unit set may include one or more time domain units, and in some implementations, all time domain units in the time domain unit set may be used for SL PRS transmission, that is, the time domain units included in the time domain unit set are all SL PRS resources. In some other implementations, a part of time domain units in the time domain unit set may be used for SL PRS transmission.

In some implementations, time domain units used for transmitting an SL PRS in the time domain unit set may be divided into one or more SL PRS resources. An SL PRS resource may be reserved or selected as a whole by a terminal device, or in other words, the SL PRS resource may be a basic time domain unit for resource reservation by the terminal device.

In embodiments of this application, if the time domain units used for SL PRS transmission in the time domain unit set is allowed to be divided into a plurality of SL PRS resources, flexibility of selecting an SL PRS resource can be improved. If the time domain units used for SL PRS transmission in the time domain unit set is allowed to be divided into one SL PRS resource, complexity of reserving or selecting an SL PRS resource can be simplified.

In some implementations, one or more time domain units included in one SL PRS resource may belong to one resource pool (such as an SL PRS resource pool). In some other implementations, a quantity of time domain units of SL PRS resources included in one time domain unit set is less than or equal to a quantity of time domain units, belonging to a sidelink resource pool, in the time domain unit set.

In some implementations, an SL PRS resource may also be used for transmitting a PSSCH demodulation reference signal (demodulation reference signal, DMRS). In this case, the PSSCH DMRS may be referred to as a second-type SL PRS. Accordingly, the SL PRS may be referred to as a first-type SL PRS. Certainly, in embodiments of this application, the SL PRS resource may alternatively be used for transmitting only the first-type SL PRS.

For example, the time domain unit set is slot, and the time domain unit set is symbol. The SL PRS resource may be formed by one or more symbols belonging to an SL PRS resource pool, symbols belonging to a same SL PRS resource may be located in a same slot, and a quantity of symbols of the SL PRS resource is less than or equal to a quantity of symbols belonging to an SL PRS resource pool in one slot.

In some implementations, one SL PRS resource in the resource pool occupies a plurality of consecutive time domain units in time domain. For example, a symbol is used as a time domain unit, one SL PRS resource in the resource pool occupies a plurality of consecutive symbols in time domain. Certainly, in embodiments of this application, the time domain units occupied by the SL PRS resource in time domain may not be consecutive in time domain, or only a part of the time domain units are consecutive in time domain, which is not limited in embodiments of this application.

The time domain unit set may be any time domain unit set in a known communications system, for example, may be a slot, a subframe, or a frame. Certainly, the time domain unit set may alternatively be any time domain unit set introduced in a future communications system, which is not limited in embodiments of this application.

In addition, the time domain unit may be any time domain unit in a known communications system, for example, may be a symbol, a slot, a subframe, or a frame. Certainly, the time domain unit may alternatively be any time domain unit introduced in a future communications system, which is not limited in embodiments of this application.

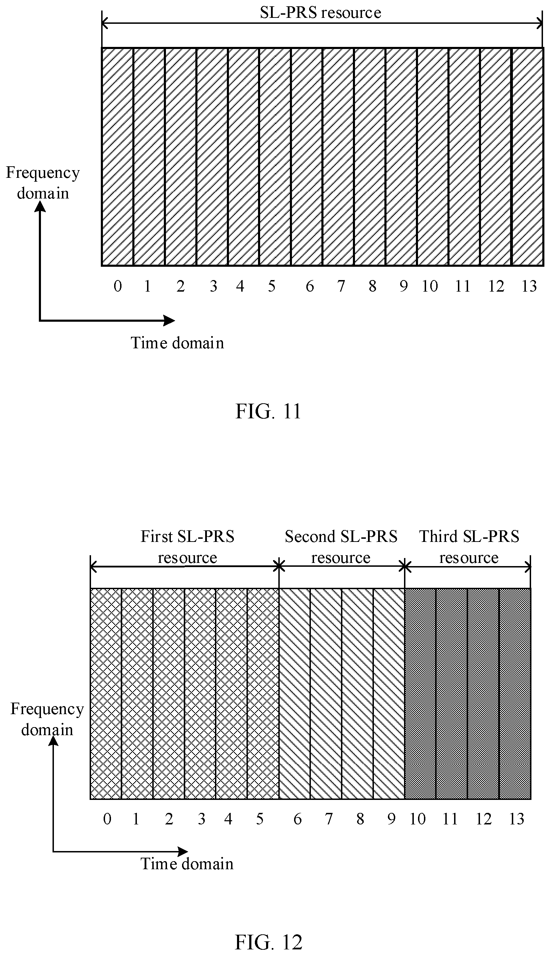

In the following, the symbol is used as a time domain unit, and correspondingly, the slot is used as a time domain unit set. With reference to FIG. 11 to FIG. 12, the SL PRS resource in embodiments of this application is described.

In some implementations, symbols for transmitting an SL PRS in a slot may be considered as one SL PRS resource. Referring to FIG. 11, it is assumed that a slot includes 14 symbols: symbols 0 to 13, and the symbols 0 to 13 can be used to transmit an SL PRS. In this case, the symbols 0 to 13 may be considered as one SL PRS resource.

In some implementations, symbols for transmitting an SL PRS in a slot may be considered as a plurality of SL PRS resources. Referring to FIG. 11, it is assumed that a symbol set includes 14 symbols: symbols 0 to 13. The symbols 0 to 5 may be considered as a first SL PRS resource, the symbols 6 to 9 may be considered as a second SL PRS resource, and the symbols 10 to 13 may be considered as a third SL PRS resource.

In the second mode in the resource selection mode described above, when performing resource exclusion, the terminal device uses a single slot resource as a resource unit. In other words, each element in a candidate resource set obtained after resource exclusion is a single slot resource, and the single slot resource is a resource formed by consecutive L_subch sub-channels in one slot. However, in a process of selecting an SL PRS resource, how the terminal device determines a resource unit when performing resource exclusion is a problem to be solved.

Therefore, an embodiment of this application provides a wireless communication method. In this solution, a terminal device may determine configuration information (also referred to as "first configuration information") for configuring an SL PRS resource in a resource pool, which helps the terminal device determine, in selection of the SL PRS resource, a resource unit used for resource exclusion.

In some scenarios, the resource pool may be a resource pool in which a frequency division multiplexing resource may exist. In this case, if an SL PRS is transmitted on another frequency domain resource in the resource pool, receiving of sidelink information (for example, sidelink channel and/or sidelink information) transmitted on the another frequency domain resource may be affected. Thus, the resource pool used for transmitting the SL PRS may occupy an entire sidelink BWP. In other words, the resource pool may include a resource pool that occupies one sidelink BWP.

Certainly, in embodiments of this application, the resource pool may include a shared resource pool between sidelink communications or a dedicated resource pool. The shared resource pool between sidelink communications may be understood as that the resource pool includes a resource for transmitting other sidelink information than the SL PRS and an SL PRS resource, and the other sidelink information may include a PSSCH. The PSSCH may be, for example, transmitted by a backward terminal device (namely, a terminal device in 3GPP release 16 and release 17). The dedicated resource pool may be understood as that the resource pool does not include a resource for transmitting the PSSCH, but includes the SL PRS resource.

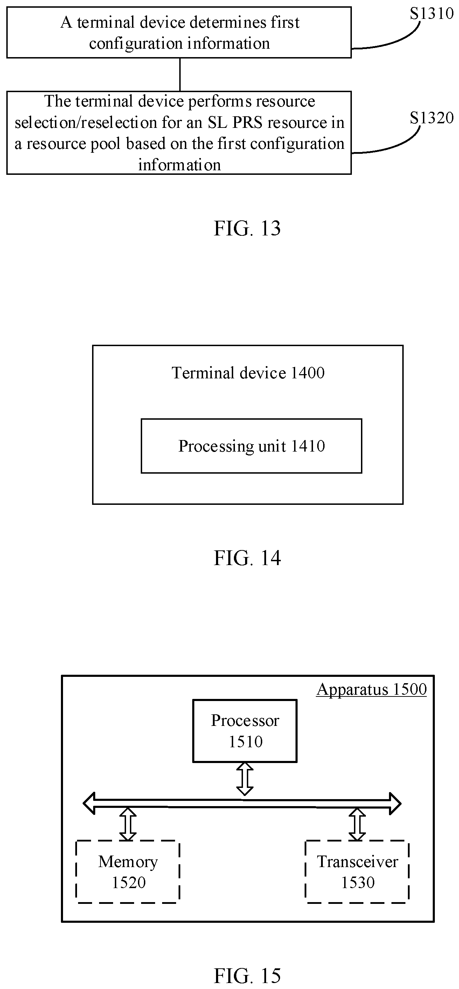

With reference to FIG. 13, the following describes a wireless communication method according to an embodiment of this application. FIG. 13 is a schematic flowchart of a wireless communication method according to an embodiment of this application. The method shown in FIG. 13 includes step S1310.

In step S1310, a terminal device determines first configuration information.

The first configuration information is configured to configure an SL PRS resource in a resource pool. In some implementations, the terminal device may determine the first configuration information based on configuration information in the resource pool, and the configuration information of the resource pool may be pre-configuration or configured, which is not limited in embodiments of this application.

In some implementations, the first configuration information may include one or more of the following: a first parameter, a second parameter, or a third parameter. The foregoing parameters are described below.

The first parameter may be used for indicating a time domain position of an SL PRS resource allowed in one slot of the resource pool.

In some implementations, the first parameter includes a fourth parameter, where the fourth parameter is used for indicating a start symbol allowed to be occupied by the SL PRS resource in one slot; or the fourth parameter is used for indicating an SL PRS start symbol position allowed in one slot.

In some scenarios, there may be one or more start symbols allowed to be occupied by the SL PRS resource in one slot. For example, as shown in FIG. 11, 14 symbols included in one slot may be used for SL PRS transmission (or sending of an SL PRS), and a start symbol allowed to be occupied by an SL PRS resource in the slot is symbol 0. For another example, referring to FIG. 12, 14 symbols included in one slot may be used for SL PRS transmission, and start symbols allowed to be occupied by SL PRS resources in the slot may include a plurality of symbols: symbol 0, symbol 6, and symbol 10.

In some other implementations, the first parameter may include a fifth parameter, and the fifth parameter is used for indicating a quantity of symbols allowed to be occupied by the SL PRS resource in one slot.

In some implementations, the fifth parameter may be used for indicating a minimum value (which may be represented by S_min) of the quantity of symbols allowed to be occupied by the SL PRS resource in one slot. In other words, a quantity of symbols included in any SL PRS resource in one slot should not be less than S_min. For example, a quantity of consecutive symbols included in any SL PRS resource in one slot should not be less than S_min.

Accordingly, in some implementations, when a higher layer of the terminal device triggers a physical layer of the terminal device to perform resource selection or resource reselection, the physical layer of the terminal device should consider all SL PRS resources configured or pre-configured in a resource selection window as a candidate resource set, and a quantity of consecutive symbols included in any SL PRS resource should not be less than S_min.

It should be noted that, in embodiments of this application, the parameter S_min may be applicable to a scenario in which the time domain resource occupied by the SL PRS resource includes a plurality of consecutive symbols that use a symbol in the slot as a start symbol, that is, may be applicable to a scenario in which a start symbol of the time domain resource occupied by the SL PRS resource is relatively flexible. Certainly, the parameter may also be used in another scenario, which is not limited in embodiments of this application.

In addition, in the foregoing scenarios, in order to ensure that a receiving terminal can correctly receive an SL PRS, a time for transmitting indication signaling that indicates transmission of the SL PRS should be earlier than a time for transmitting the indicated SL PRS, and a time gap between an end point of the indication signaling and a start point of the SL PRS should be greater than a specific threshold. In this way, the receiving terminal can decode the indication signaling before transmission of the SL PRS.

In embodiments of this application, the time domain resource occupied by the SL PRS resource includes a plurality of consecutive symbols that use a symbol in the slot as a start symbol, that is, a start point and an end point of the time domain resource occupied by the SL PRS resource are relatively flexible, which facilitates improving flexibility of resource selection of the SL PRS resource.

In some scenarios, the quantity of symbols allowed to be occupied by the SL PRS resource in one slot may include one or more. In some other scenarios, different quantities of symbols may be allowed to be occupied by SL PRS resources in a plurality of slots in the resource pool. For example, if slots of different time domain lengths exist in the resource pool, different SL PRS start positions may be allowed in different slots. In other words, the resource pool includes a first slot and a second slot, and the first slot and the second slot have different time domain lengths. The first slot corresponds to a first value of the fourth parameter, the second slot corresponds to a second value of the fourth parameter, and the first value is different from the second value.

For example, assuming that 14 symbols included in a slot are allowed to be used for SL PRS transmission, start symbols of SL PRSs allowed in the slot may be {0, 6, 10}. Assuming that 10 symbols included in the slot are allowed to be used for SL PRS transmission, start symbols of SL PRSs allowed in the slot may be {0, 6}.

Certainly, in embodiments of this application, symbols allowed to be occupied by the SL PRS resources in a plurality of slots in the resource pool may be the same in quantity.

As described above, a plurality of start symbols may be allowed in one slot. In some implementations, the plurality of start symbols include a first symbol and a second symbol that are adjacent in time domain position, and an SL PRS resource corresponding to the first symbol includes the first symbol and all symbols between the first symbol and the second symbol in time domain.

In other words, it is assumed that a slot includes two start symbols *i* and *i+n.* Correspondingly, an SL PRS resource corresponding to the start symbol *i* includes the start symbol *i* and symbols between the start symbol *i* and the start symbols *i+n.* For example, as shown in FIG. 12, if a first start symbol in the slot is symbol 0, and a second start symbol is symbol 6, an SL PRS resource corresponding to the symbol 0 may include symbols 0 to 5.

In some other implementations, a last start symbol of the plurality of start symbols is a third symbol, a last symbol of symbols allowed to be used for SL PRS transmission in one slot is a fourth symbol, and an SL PRS resource corresponding to the third symbol occupies the third symbol, the fourth symbol, and symbols between the third symbol and the fourth symbol in time domain.

In other words, it is assumed that a start symbol *j* is a last start symbol in a slot, and a last symbol allowed to be used for SL PRS transmission in the slot is a symbol *j+m.* Correspondingly, an SL PRS resource corresponding to the start symbol *j* includes the start symbol *j*, the symbol *j+m,* and symbols located between the start symbol *j* and the symbol *j+m* in time domain. For example, still referring to FIG. 12, the last start symbol in the slot is symbol 10, and the last symbol allowed to be used for SL PRS transmission in the slot is symbol 13, an SL PRS resource corresponding to the symbol 10 may include four symbols, namely, symbols 10 to 13.

In some scenarios, the slot may include a symbol used for automatic gain control, a symbol used for transmit/receive switching, and a symbol used for indicating a sidelink channel for SL PRS transmission. In this case, in embodiments of this application, the symbol allowed to be used for SL PRS transmission (also referred to as a "target symbol") may include one or more of the foregoing symbols. In some other embodiments of this application, the symbol occupied by an SL PRS resource (also referred to as a "target symbol") may include one or more of the foregoing symbols.

It should be noted that, an application scenario for the fourth parameter and the fifth parameter is not limited in embodiments of this application. In some implementations, the foregoing parameters may be applied to one or more of the following scenarios. Scenario 1: A quantity of frequency domain units (for example, resource blocks (resource block, RBs)) occupied by one SL PRS in a resource pool is equal to all RBs (also referred to as "first bandwidth") allowed to be used for SL PRS transmission in the resource pool, and a frequency domain resource occupied by the SL PRS resource includes REs using a target resource element (resource element, RE) (or a specific RE) in a 1^{st} frequency domain unit allowed to be used for SL PRS transmission in the resource pool as a start frequency domain position and spaced at an interval of C, where C is a comb size configured for the SL PRS in the resource pool. In addition, a time domain resource occupied by the SL PRS resource includes a plurality of consecutive symbols starting from a specific symbol in one slot. The specific RE and/or the specific symbol may be understood as a parameter that is pre-configured, predefined, or configured by a network device.

Scenario 2: A quantity of frequency domain units (for example, RBs) occupied by one SL PRS in the resource pool is less than or equal to a first bandwidth, and a frequency domain resource occupied by the SL PRS resource includes REs using a specific RE in a 1^{st} RB occupied by the SL PRS resource as a start frequency domain position and spaced at an interval of C, where C is a comb size configured for the SL PRS in the resource pool. In addition, a time domain resource occupied by the SL PRS resource includes a plurality of consecutive symbols starting from a specific symbol in one slot. The specific symbol may be understood as a symbol that is pre-configured, predefined, or configured by a network device.

The second parameter may be used for indicating a comb size of the SL PRS resource in the resource pool, and the comb size is used for indicating a quantity of symbols in a gap between two adjacent comb resources occupied by the SL PRS resource.

In some implementations, SL PRS resources in the resource pool may have a same comb size. For example, the comb size of the SL PRS resources in the resource pool may be one of {1, 2, 4, 6, 8, 12}. Certainly, in embodiments of this application, the SL PRS resources in the resource pool may have different comb sizes. For example, the comb sizes of the SL PRS resources in the resource pool may be multiple of {1, 2, 4, 6, 8, 12}.

In embodiments of this application, the SL PRS resources in the resource pool may have a same comb size, which facilitates simplification of a setting manner of the comb size.

In embodiments of this application, the comb size may be configured by a configuration parameter of the resource pool, or may be predefined by a protocol. For example, if the SL PRS resources in the resource pool have a same comb size, the comb size may be configured by the configuration parameter of the resource pool.

In some implementations, SL PRS resources having different time domain start positions in the resource pool correspond to different comb sizes. For example, still referring to FIG. 12, a comb size corresponding to an SL PRS resource with a start symbol of symbol 0 may be 4. A comb size corresponding to an SL PRS resource with a start symbol of symbol 6 may be 2. A comb size corresponding to an SL PRS resource with a start symbol of symbol 10 may be 2. SL PRS resources having different start positions correspond to different comb sizes, which facilitates improvement of properness of the comb size. Certainly, in embodiments of this application, SL PRS resources having different start positions may alternatively correspond to a same comb size.

In embodiments of this application, the comb size may be directly indicated by the second parameter. For example, for the SL PRS resource with the start symbol of symbol 0, the second parameter C0 may be 4. For the SL PRS resource with the start symbol of symbol 6, the second parameter C1 may be 2. For the SL PRS resource with the start symbol of symbol 10, the second parameter C1 may be 2. Certainly, in embodiments of this application, the comb size may alternatively be predefined by a protocol. For example, the protocol may define a correspondence between a comb size and a start symbol. Correspondingly, a comb size corresponding to a start symbol may be determined based on the start symbol. This is not limited in embodiments of this application.

In some implementations, SL PRS resources having different time domain lengths in the resource pool correspond to different comb sizes. For example, still referring to FIG. 12, a time domain length of the first SL PRS resource is 6 symbols, and a corresponding comb size may be 4. A time domain length of both the second SL PRS resource and the third SL PRS resource is 4 symbols, and a corresponding comb size may be 2. The SL PRS resources having different time domain lengths correspond to different comb sizes, which facilitates improvement of properness of the comb size. Certainly, in embodiments of this application, the SL PRS resources having different time domain lengths may alternatively correspond to a same comb size.

In embodiments of this application, the comb size may be directly indicated by the second parameter. For example, still referring to FIG. 12, for the first SL PRS resource, the second parameter C0 may be 4. For the second SL PRS resource and the third SL PRS resource, the second parameter C1 may be 2. Certainly, in embodiments of this application, the comb size may alternatively be predefined by a protocol. For example, the protocol may define a correspondence between a comb size and a start symbol. Correspondingly, a comb size corresponding to a start symbol may be determined based on the start symbol. This is not limited in embodiments of this application.

In some implementations, a comb size of an SL PRS resource in the resource pool is determined based on a quantity of symbols included in the SL PRS resource or a quantity of symbols that are included in the SL PRS resource and allowed to be used for SL PRS transmission.

For example, it is assumed that the SL PRS resource includes N symbols, and a quantity of symbols that cannot be used for SL PRS transmission in the SL PRS resource is Y. Correspondingly, a comb size corresponding to the SL PRS resource may be a value closest to N-Yin {1, 2, 4, 6, 8, 12}.

For another example, it is assumed that the SL PRS resource includes N symbols, and a quantity of symbols that cannot be used for SL PRS transmission in the SL PRS resource is Y. Correspondingly, a comb size corresponding to the SL PRS resource may be a value not greater than N-Y in {1, 2, 4, 6, 8, 12}.

It should be noted that, if the SL PRS resource includes only one automatic gain control (automatic gain control, AGC) symbol and one transmit/receive switching symbol that cannot be used for SL PRS transmission, Y = 2. If the SL PRS resource includes, in addition to an AGC symbol and a transmit/receive switching symbol, a symbol that is used for indicating an SL channel for SL PRS transmission and that cannot be used for SL PRS transmission, Y = 3.

In addition, in embodiments of this application, for a resource pool, a comb size being determined based on a quantity of symbols included in the SL PRS resource or a quantity of symbols that are included in the SL PRS resource and allowed to be used for SL PRS transmission may be predefined in a protocol. Certainly, in embodiments of this application, the manner of determining a comb size may be further pre-configured or configured by a network device.

It should be noted that an application scenario of the third parameter in embodiments of this application is not limited. In some implementations, the foregoing parameters may be applicable to scenario 1 and/or scenario 2. In some other implementations, the third parameter is further applicable to scenario 3 and/or scenario 4. Scenario 3: A quantity of frequency domain units (for example, RBs) occupied by one SL PRS resource in a resource pool is equal to a first bandwidth, and a frequency domain resource occupied by the SL PRS resource is a resource element starting from a specific RE in a 1^{st} RB allowed to be used for SL PRS transmission in the resource pool and spaced at an interval of C, where C is a comb size configured for the SL PRS in the resource pool. In addition, a time domain resource occupied by the SL PRS resource includes a plurality of consecutive symbols starting from a symbol in one slot.

Scenario 4: A quantity of frequency domain units (for example, RBs) occupied by one SL PRS resource in a resource pool is less than or equal to a first bandwidth, and a frequency domain resource occupied by the SL PRS resource includes REs using a specific RE in a 1^{st} RB occupied by the SL PRS resource as a start frequency domain position and spaced at an interval of C, where C is a comb size configured for the SL PRS in the resource pool. In addition, a time domain resource occupied by the SL PRS resource includes a plurality of consecutive symbols starting from a symbol in one slot.

The third parameter is used for indicating a frequency domain position of an SL PRS resource allowed in the resource pool. In some implementations, the third parameter may include a sixth parameter and/or a seventh parameter.

The sixth parameter is used for indicating an index of a start RE allowed to be occupied by the SL PRS resource in the resource pool.

In some implementations, the index of the start RE indicated by the sixth parameter is any value in a value range corresponding to the comb size. For example, assuming that the value range of the comb size is [0, C-1], correspondingly, the index of the start RE indicates any value in the range of [0, C-1]. This manner of configuring a start RE facilitates improving flexibility of selection of an SL PRS resource.

In embodiments of this application, one or more start REs in the resource pool may be determined by using a resource pool configuration parameter. Certainly, in embodiments of this application, the start RE may further be predefined by a protocol, or configured by a network device.

In some implementations, a plurality of SL PRS resources in the resource pool may correspond to different start REs. For example, a plurality of SL PRS resources that include different quantities of symbols may correspond to different start REs. For another example, a plurality of SL PRS resources corresponding to different start symbols may correspond to different start REs.

In embodiments of this application, different SL PRS resources may correspond to different start REs, so that a gap of a quantity of REs exists between different SL PRS resources, thereby reducing in-band emission (In-Band Emission, IBE) interference. Certainly, if the foregoing problem is not considered, a plurality of SL PRS resources may correspond to a same start RE.

In some implementations, the sixth parameter may indicate a start RE corresponding to a respective SL PRS resource. In some implementations, the resource pool may include a first SL PRS resource and a second SL PRS resource. If the first SL PRS resource and the second SL PRS resource have different allowed comb sizes, the sixth parameter includes parameters respectively corresponding to the first SL PRS resource and the second SL PRS resource. The first SL PRS resource and the second SL PRS resource include different quantities of symbols, or the first SL PRS resource and the second SL PRS resource have different start symbols in one slot of the resource pool.

The seventh parameter is used for indicating an RE gap between adjacent SL PRS resources in the resource pool, or is used for indicating a quantity of REs in a gap between adjacent SL PRS resources in the resource pool.

In some implementations, an RE gap d may be explicitly indicated by using the seventh parameter, and the RE gap d is a value not greater than a comb size C. Correspondingly, the index of the start RE corresponding to the SL PRS resource allowed in the resource pool may be 0, 0+d, ..., 0+floor (C/d)*d, where floor(.) indicates a floor operation.

It should be noted that an application scenario of the fourth parameter in embodiments of this application is not limited. In some implementations, the fourth parameter may be applicable to one or more of scenarios 1 to 4.

In some implementations, in a case that the resource pool is a first-type resource pool, the first configuration information includes a parameter indicating a time domain position allowed to be occupied by an SL PRS resource in one slot of the resource pool. Alternatively, in a case that the resource pool is a second-type resource pool, one SL PRS resource of the resource pool occupies all resources of time domain resources allowed to be used for SL PRS transmission in one slot.

In some implementations, the first-type resource pool may be a resource pool for performing channel sensing based on first measurement information, and the second-type resource pool is a resource pool for performing channel sensing based on second measurement information. The first measurement information is measurement information for a PSCCH DMRS, and the second measurement information is measurement information for a PSSCH DMRS.

For example, if the resource pool is configured for a channel sensing operation (sensing operation) of measuring an L1 RSRP of a PSCCH DMRS, the first configuration information may be used to configure a start symbol (namely, the fourth parameter) corresponding to an SL PRS resource allowed in each slot in the resource pool, and a quantity (namely, the fifth parameter) of symbols occupied by an SL PRS resource corresponding to the start symbol.

For another example, if the resource pool is configured for a channel sensing operation of measuring an L1 RSRP of a PSSCH DMRS, the terminal device considers that one SL PRS resource includes all symbols allowed to be used for SL PRS transmission in one slot. The symbols allowed to be used for SL PRS transmission may not include a symbol occupied by the PSSCH DMRS; and/or a symbol occupied by another physical channel.

In embodiments of this application, a time domain resource occupied by a PSCCH is generally located at the front of a slot, and thus in a resource pool for performing channel sensing based on the first measurement information, there may be many options for the time domain position occupied by the SL PRS resource. Therefore, by using the first configuration information to indicate a parameter of a time domain position allowed to be occupied by an SL PRS resource in one slot of the resource pool, properness of the SL PRS resource can be improved.

Time domain resources occupied by a PSSCH are generally a relatively large quantity of time domain resources in one slot, and thus, in a resource pool for performing channel sensing based on the second measurement information, there may not be many options for the time domain position occupied by the SL PRS resource. Therefore, the SL PRS resource may occupy all resources of time domain resources allowed to be used for SL PRS transmission in one slot.

In addition, in embodiments of this application, the solution in which a time domain position occupied by an SL PRS is associated with a type of a resource pool may be applicable to one or more of the following scenarios. Scenario 5: A quantity of frequency domain units (for example, RBs) occupied by one SL PRS resource in the resource pool is equal to a first bandwidth, and a frequency domain resource occupied by the SL PRS resource includes REs using a target RE (or a specific RE) in a 1^{st} frequency domain unit allowed to be used for SL PRS transmission in the resource pool as a start frequency domain position and spaced at an interval of C, where C is a comb size configured for the SL PRS in the resource pool.

Scenario 6: A quantity of frequency domain units (for example, RBs) occupied by one SL PRS resource in a resource pool is less than or equal to a first bandwidth, and a frequency domain resource occupied by the SL PRS resource includes REs using a specific RE in a 1^{st} RB occupied by the SL PRS resource as a start frequency domain position and spaced at an interval of C, where C is a comb size configured for the SL PRS in the resource pool.

The foregoing describes parameters that may be included in the first configuration information in embodiments of this application. The following describes a solution in which a terminal device performs resource selection or resource reselection based on the first configuration information in embodiments of this application.

In some implementations, the method further includes: step S1320, the terminal device performs resource selection/reselection for the SL PRS resource in the resource pool based on the first configuration information.

In some scenarios, if a quantity of frequency domain units (for example, RBs) occupied by one SL PRS resource in the resource pool is equal to a first bandwidth, a frequency domain resource occupied by the SL PRS resource may include REs starting from a target RE in a 1^{st} RB allowed to be used for SL PRS transmission in the resource pool and spaced at an interval of C, where C is a comb size corresponding to the SL PRS resource.

Correspondingly, in the foregoing case, the SL PRS resource may be represented as R(e, y, s), where e denotes an index of a start RE of the SL PRS resource in an RB, y denotes an index of a slot in which a resource unit corresponding to the SL PRS resource is located, and s denotes an index of a start symbol of the SL PRS resource in a slot in which the SL PRS resource is located.

In some implementations, when a higher layer of the terminal device (for example, an MAC layer) triggers a physical layer of the terminal device to perform resource selection or resource reselection, the physical layer of the terminal device may consider all SL PRS resources configured or pre-configured in a resource selection window as a candidate resource set. Then, the physical layer of the terminal device may exclude, from the candidate resource set based on a channel sensing result, a resource that is reserved by another terminal device and/or whose interference level may be higher than a specific threshold. Finally, the physical layer of the terminal device reports a remaining resource to the higher layer of the terminal device.

It should be noted that the specific threshold may be pre-configured or configured by a network device, or may be predefined by a protocol, which is not limited in embodiments of this application.

In some other scenarios, resource selection/reselection is further based on an eighth parameter and/or a ninth parameter if a quantity of frequency domain units (for example, RBs) occupied by one SL PRS resource allowed in a resource pool is less than or equal to a first bandwidth.

The eighth parameter is used for indicating an index (represented by "x") of a 1^{st} frequency domain unit of an SL PRS resource in resource pool. In some implementations, the frequency domain unit may be consecutive F RBs, where F ≥ 1 and F is a positive integer.

In embodiments of this application, a value of F may be configured by a network device, may be pre-configured, or defined by a protocol. For example, F may be defined as 1 by a protocol, that is, the frequency domain unit is one RB. For another example, F may be pre-configured or configured by a network device as an integer greater than 1.

In some implementations, if the value of F is 1, the frequency domain unit may be referred to as a sub-channel. Accordingly, a quantity of sub-channel included in the resource pool is CEIL(N_RB/F), where N_RB denotes a total quantity of RBs included in the resource pool pre-configured or configured by a network device.

In some scenarios, if N_RB cannot be divided by F evenly, a quantity of RBs included in a sub-channel with a largest index value in the resource pool is mod(N_RB, F), where mod(.) denotes a modulo operation, and a quantity of RBs included in another sub-channel in the resource pool may be F.

The ninth parameter is used for indicating a quantity (which may be represented by "N_f") of frequency domain units included in an SL PRS selected by the terminal device.

In some implementations, the ninth parameter may be an exact value of the quantity of frequency domain units included in an SL PRS selected by the terminal device. For example, the higher layer of the terminal device may indicate the exact value of N_f by using the ninth parameter. Correspondingly, a physical layer of the terminal device may consider all SL PRS resources preconfigured or configured in a resource selection window as a candidate resource set, and a quantity of frequency domain units included in any SL PRS resource is N_f. Then, the physical layer of the terminal device may perform resource exclusion according to a channel sensing result. Finally, the physical layer of the terminal device may report a remaining resource to the higher layer of the terminal device.

In some other implementations, the ninth parameter is used for indicating a minimum value of the quantity of frequency domain units. For example, the higher layer of the terminal device may indicate a minimum value of N_f. Correspondingly, the physical layer of the terminal device may consider all SL PRS resources preconfigured or configured in the resource selection window as a candidate resource set, and a quantity of frequency domain units included in any one SL PRS resource is not less than N_f. Then, the physical layer of the terminal device may consider SL PRS resources with different N_f values as candidate resources, and then perform resource exclusion according to a channel sensing result. Finally, the physical layer of the terminal device may report a remaining resource to the higher layer of the terminal device.

In some implementations, if a quantity of frequency domain units (for example, RBs) occupied by one SL PRS resource allowed in a resource pool is less than or equal to a first bandwidth, the SL PRS resource is denoted by R(x, N_f, e, y, s), where e denotes an index of a start RE of the SL PRS resource in an RB, y denotes an index of a slot in which a resource unit is located, and s denotes an index of a start symbol of the SL PRS resource in a slot in which the SL PRS resource is located.

The method embodiments of this application are described above in detail with reference to FIG. 1 to FIG. 13. Apparatus embodiments of this application are described below in detail with reference to FIG. 14 to FIG. 15. It should be understood that the descriptions of the method embodiments correspond to descriptions of the apparatus embodiments, and therefore, for parts that are not described in detail, reference may be made to the foregoing method embodiments.

FIG. 14 is a schematic diagram of a terminal device according to an embodiment of this application. A terminal device 1400 shown in FIG. 14 includes a processing unit 1410.

The processing unit 1410 is configured to determine first configuration information, and the first configuration information is used for configuring a sidelink positioning reference signal SL PRS resource in a resource pool.

In some implementations, the first configuration information includes one or more of the following: a first parameter, used for indicating a time domain position of an SL PRS resource allowed in one slot of the resource pool; a second parameter, used for indicating a comb size of an SL PRS resource in the resource pool; or a third parameter, used for indicating a frequency domain position of an SL PRS resource allowed in the resource pool.

In some implementations, the first parameter includes one or more of the following: a fourth parameter, used for indicating a start symbol allowed to be occupied by the SL PRS resource in the one slot; or a fifth parameter, used for indicating a quantity of symbols allowed to be occupied by the SL PRS resource in the one slot.

In some implementations, the resource pool includes a first slot and a second slot, the first slot and the second slot have different time domain lengths, the first slot corresponds to a first value of the fourth parameter, the second slot corresponds to a second value of the fourth parameter, and the first value is different from the second value.

In some implementations, a plurality of the start symbols are allowed in the one slot, the plurality of start symbols include a first symbol and a second symbol that are adjacent in time domain position, and an SL PRS resource corresponding to the first symbol includes the first symbol and all symbols between the first symbol and the second symbol in time domain; or a plurality of the start symbols are allowed in the one slot, a last start symbol in the plurality of start symbols is a third symbol, a last symbol in symbols allowed to be used for SL PRS transmission in the one slot is a fourth symbol, and an SL PRS resource corresponding to the third symbol occupies the third symbol, the fourth symbol, and all symbols between the third symbol and the fourth symbol in time domain.

In some implementations, a target symbol in the one slot includes one or more of the following: a symbol for automatic gain control in the one slot; a symbol for transmit/receive switching in the one slot; or a symbol used for indicating transmission of an SL PRS and occupied by a sidelink channel in the slot. The target symbol is a symbol allowed to be used for SL PRS transmission in the one slot or a symbol occupied by the SL PRS resource in the one slot.

In some implementations, the fifth parameter is used for indicating a minimum value of the quantity of symbols allowed to be occupied by the SL PRS resource in the one slot.

In some implementations, one SL PRS resource in the resource pool occupies a plurality of consecutive symbols in time domain.

In some implementations, the comb size of the SL PRS resource in the resource pool meets one or more of the following: SL PRS resources in the resource pool have a same comb size; SL PRS resources having different time domain start positions in the resource pool correspond to different comb sizes; SL PRS resources having different time domain lengths in the resource pool correspond to different comb sizes; or the comb size of the SL PRS resource in the resource pool is determined based on a quantity of symbols included in the SL PRS resource or a quantity of symbols that are included in the SL PRS resource and allowed to be used for SL PRS transmission.

In some implementations, the third parameter includes one or more of the following: a sixth parameter, used for indicating an index of a start resource element RE allowed to be occupied by the SL PRS resource in the resource pool; or a seventh parameter, used for indicating an RE gap between adjacent SL PRS resources in the resource pool.

In some implementations, the index of the RE indicated by the sixth parameter is any value in a value range corresponding to the comb size.

In some implementations, the resource pool includes a first SL PRS resource and a second SL PRS resource. If the first SL PRS resource and the second SL PRS resource are allowed to have different comb sizes, the sixth parameter includes parameters respectively corresponding to the first SL PRS resource and the second SL PRS resource. The first SL PRS resource and the second SL PRS resource include different quantities of symbols, or the first SL PRS resource and the second SL PRS resource have different start symbols in one slot of the resource pool.

In some implementations, in a case that the resource pool is a first-type resource pool, the first configuration information includes a parameter indicating a time domain position allowed to be occupied by an SL PRS resource in one slot of the resource pool. Alternatively, in a case that the resource pool is a second-type resource pool, one SL PRS of the resource pool occupies all resources of time domain resources allowed to be used for SL PRS transmission in one slot.

In some implementations, the first-type resource pool is a resource pool for performing channel sensing based on first measurement information, and the second-type resource pool is a resource pool for performing channel sensing based on second measurement information. The first measurement information is measurement information for a PSCCH DMRS, and the second measurement information is measurement information for a PSSCH DMRS.

In some implementations, the terminal device further includes: the terminal device performs resource selection/reselection for the SL PRS resource in the resource pool based on the first configuration information.

In some scenarios, in a case that the resource pool supports that a quantity of frequency domain units (for example, RBs) occupied by one SL PRS resource is less than or equal to a first bandwidth, the resource selection/reselection is further based on one or more of the following parameters: an eighth parameter, used for indicating an index of a 1^{st} frequency domain unit of the SL PRS resource in the resource pool; or a ninth parameter, used for indicating a quantity of frequency domain units included in an SL PRS selected by the terminal device. The first bandwidth is a total bandwidth occupied by all resource blocks allowed to be used for SL PRS transmission in the resource pool, in other words, the first bandwidth is all frequency domain units (for example, RBs) occupied by resource blocks allowed to be used for SL PRS transmission in the resource pool.

In some implementations, the ninth parameter is used for indicating a minimum value of the quantity of frequency domain units.

In some implementations, the resource pool includes one or more of the following resource pools: a resource pool occupying one sidelink BWP; or a shared resource pool between sidelink communications.

In an optional embodiment, the processing unit 1410 may be a processor 1510. The terminal device 1400 may further include a transceiver 1530 and a memory 1520. Details are shown in FIG. 15.

FIG. 15 is a schematic structural diagram of a communications apparatus according to an embodiment of this application. Dashed lines in FIG. 15 indicate that a unit or module is optional. The apparatus 1500 may be configured to implement the methods described in the foregoing method embodiments. The apparatus 1500 may be a chip, a terminal device, or a network device.

The apparatus 1500 may include one or more processors 1510. The processor 1510 may support the apparatus 1500 in implementing the methods described in the foregoing method embodiments. The processor 1510 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 1500 may further include one or more memories 1520. The memory 1520 stores a program that may be executed by the processor 1510 to cause the processor 1510 to perform the methods described in the foregoing method embodiments. The memory 1520 may be separated from or integrated into the processor 1510.

The apparatus 1500 may further include a transceiver 1530. The processor 1510 may communicate with another device or chip through the transceiver 1530. For example, the processor 1510 may transmit data to and receive data from another device or chip through the transceiver 1530.

An embodiment of this application further provides a computer-readable storage medium for storing a program. The computer-readable storage medium may be applied to the terminal or the network device provided in embodiments of this application, and the program causes a computer to execute the methods performed by the terminal or the network device in various embodiments of this application.

An embodiment of this application further provides a computer program product. The computer program product includes a program. The computer program product may be applied to the terminal or the network device provided in embodiments of this application, and the program causes a computer to execute the methods performed by the terminal or the network device in various embodiments of this application.

An embodiment of this application further provides a computer program. The computer program may be applied to the terminal or the network device provided in embodiments of this application, and the computer program causes a computer to execute the methods performed by the terminal or the network device in various embodiments of this application.

It should be understood that the terms "system" and "network" in this application may be used interchangeably. In addition, the terms used in this application are used only to illustrate specific embodiments of this application, but are not intended to limit this application. The terms "first", "second", "third", "fourth", and the like in the specification, claims, and drawings of this application are used to distinguish between different objects, rather than to describe a specific order. In addition, the terms "include" and "have" and any variations thereof are intended to cover a non-exclusive inclusion.

In embodiments of this application, "indication" mentioned herein may refer to a direct indication, or may refer to an indirect indication, or may mean that there is an association relationship. For example, if A indicates B, it may mean that A directly indicates B, for example, B may be obtained from A. Alternatively, it may mean that A indicates B indirectly, for example, A indicates C, and B may be obtained from C. Alternatively, it may mean that there is an association relationship between A and B.

In embodiments of this application, "B corresponding to A" means that B is associated with A, and B may be determined based on A. However, it should be further understood that, determining B based on A does not mean determining B based only on A, but instead, B may be determined based on A and/or other information.

In embodiments of this application, the term "correspond" may mean that there is a direct or indirect correspondence between the two, or may mean that there is an association relationship between the two, or may mean that there is a relationship such as indicating and being indicated, or configuring and being configured.

In embodiments of this application, "predefined" or "pre-configured" may be implemented by pre-storing corresponding code, tables, or other forms that may be used to indicate related information in devices (for example, including a terminal device and a network device), and a specific implementation thereof is not limited in this application. For example, being predefined may refer to being defined in a protocol.

In embodiments of this application, the "protocol" may refer to a standard protocol in the communications field, and may include, for example, an LTE protocol, an NR protocol, and a related protocol applied to a future communications system, which is not limited in this application.

In embodiments of this application, the term "and/or" is merely an association relationship that describes associated objects, and represents that there may be three relationships. For example, A and/or B may represent three cases: only A exists, both A and B exist, and only B exists. In addition, the character "/" in this specification generally indicates an "or" relationship between the associated objects.

In embodiments of this application, sequence numbers of the foregoing processes do not mean execution sequences. The execution sequences of the processes should be determined according to functions and internal logic of the processes, and should not be construed as any limitation on the implementation processes of embodiments of this application.

In several embodiments provided in this application, it should be understood that the disclosed system, apparatus, and method may be implemented in another manner. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented as indirect couplings or communication connections through some interfaces, apparatus or units, and may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected according to actual needs to achieve the objective of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (for example, a coaxial cable, an optical fiber, and a digital subscriber line (digital subscriber line, DSL)) manner or a wireless (for example, infrared, wireless, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid state drive (solid state drive, SSD)), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for wireless communication, comprising:
determining, by a terminal device, first configuration information, wherein the first configuration information is used for configuring a sidelink positioning reference signal SL PRS resource in a resource pool.

2. The method according to claim 1, wherein the first configuration information comprises one or more of:
a first parameter, used for indicating a time domain position of an SL PRS resource allowed in one slot of the resource pool;
a second parameter, used for indicating a comb size of an SL PRS resource in the resource pool; or
a third parameter, used for indicating a frequency domain position of an SL PRS resource allowed in the resource pool.

3. The method according to claim 2, wherein the first parameter comprises one or more of following:
a fourth parameter, used for indicating a start symbol allowed to be occupied by the SL PRS resource in the one slot; or
a fifth parameter, used for indicating a quantity of symbols allowed to be occupied by the SL PRS resource in the one slot.

4. The method according to claim 3, wherein the resource pool comprises a first slot and a second slot, the first slot and the second slot have different time domain lengths, the first slot corresponds to a first value of the fourth parameter, the second slot corresponds to a second value of the fourth parameter, and the first value is different from the second value.

5. The method according to claim 3 or 4, wherein
a plurality of the start symbols are allowed in the one slot, the plurality of start symbols comprise a first symbol and a second symbol that are adjacent in time domain position, and an SL PRS resource corresponding to the first symbol comprises the first symbol and all symbols between the first symbol and the second symbol in time domain; or
a plurality of the start symbols are allowed in the one slot, a last start symbol in the plurality of start symbols is a third symbol, a last symbol in symbols allowed to be used for SL PRS transmission in the one slot is a fourth symbol, and an SL PRS resource corresponding to the third symbol occupies the third symbol, the fourth symbol, and all symbols between the third symbol and the fourth symbol in time domain.

6. The method according to claim 5, wherein a target symbol in the one slot comprises one or more of following:
a symbol for automatic gain control in the one slot;
a symbol for transmit/receive switching in the one slot; or
a symbol used for indicating transmission of an SL PRS and occupied by a sidelink channel in the slot,
wherein the target symbol is a symbol allowed to be used for SL PRS transmission in the one slot or a symbol occupied by the SL PRS resource in the one slot.

7. The method according to any one of claims 3 to 6, wherein the fifth parameter is used for indicating a minimum value of the quantity of symbols allowed to be occupied by the SL PRS resource in the one slot.

8. The method according to any one of claims 2 to 7, wherein one SL PRS resource in the resource pool occupies a plurality of consecutive symbols in time domain.

9. The method according to any one of claims 2 to 8, wherein the comb size of the SL PRS resource in the resource pool meets one or more of following:
SL PRS resources in the resource pool have a same comb size;
SL PRS resources having different time domain start positions in the resource pool correspond to different comb sizes;
SL PRS resources having different time domain lengths in the resource pool correspond to different comb sizes; or
the comb size of the SL PRS resource in the resource pool is determined based on a quantity of symbols comprised in the SL PRS resource or a quantity of symbols that are comprised in the SL PRS resource and allowed to be used for SL PRS transmission.

10. The method according to any one of claims 2 to 9, wherein the third parameter comprises one or more of following:
a sixth parameter, used for indicating an index of a start resource element RE allowed to be occupied by the SL PRS resource in the resource pool; or
a seventh parameter, used for indicating an RE gap between adjacent SL PRS resources in the resource pool.

11. The method according to claim 10, wherein the index of the RE indicated by the sixth parameter is any value in a value range corresponding to the comb size.

12. The method according to claim 10 or 11, wherein the resource pool comprises a first SL PRS resource and a second SL PRS resource, and in a case that the first SL PRS resource and the second SL PRS resource are allowed to have different comb sizes, the sixth parameter comprises parameters respectively corresponding to the first SL PRS resource and the second SL PRS resource; and
the first SL PRS resource and the second SL PRS resource comprise different quantities of symbols, or the first SL PRS resource and the second SL PRS resource have different start symbols in one slot of the resource pool.

13. The method according to any one of claims 1 to 12, wherein
in a case that the resource pool is a first-type resource pool, the first configuration information comprises a parameter indicating a time domain position allowed to be occupied by an SL PRS resource in one slot of the resource pool; or
in a case that the resource pool is a second-type resource pool, one SL PRS of the resource pool occupies all resources of time domain resources allowed to be used for SL PRS transmission in one slot.

14. The method according to claim 13, wherein
the first-type resource pool is a resource pool for performing channel sensing based on first measurement information, and the second-type resource pool is a resource pool for performing channel sensing based on second measurement information; and
the first measurement information is measurement information for a PSCCH DMRS, and the second measurement information is measurement information for a PSSCH DMRS.

15. The method according to any one of claims 1 to 14, wherein the method further comprises:
performing, by the terminal device, resource selection/reselection for the SL PRS resource in the resource pool based on the first configuration information.

16. The method according to claim 15, wherein in a case that the resource pool supports that a bandwidth occupied by one SL PRS resource is less than or equal to a first bandwidth, the resource selection/reselection is performed further based on one or more of following parameters:
an eighth parameter, used for indicating an index of a 1^{st} frequency domain unit of the SL PRS resource in the resource pool; or
a ninth parameter, used for indicating a quantity of frequency domain units comprised in an SL PRS selected by the terminal device,
wherein the first bandwidth is a total bandwidth occupied by all resource blocks allowed to be used for SL PRS transmission in the resource pool.

17. The method according to claim 16, wherein the ninth parameter is used for indicating a minimum value of the quantity of the frequency domain units.

18. The method according to any one of claims 1 to 17, wherein the resource pool comprises one or more of following resource pools:
a resource pool occupying one sidelink BWP; or
a shared resource pool between sidelink communications.

19. A terminal device, comprising:
a processing unit, configured to determine first configuration information, wherein the first configuration information is used for configuring a sidelink positioning reference signal SL PRS resource in a resource pool.

20. The terminal device according to claim 19, wherein the first configuration information comprises one or more of following:
a first parameter, used for indicating a time domain position of an SL PRS resource allowed in one slot of the resource pool;
a second parameter, used for indicating a comb size of an SL PRS resource in the resource pool; or
a third parameter, used for indicating a frequency domain position of an SL PRS resource allowed in the resource pool.

21. The terminal device according to claim 20, wherein the first parameter comprises one or more of following:
a fourth parameter, used for indicating a start symbol allowed to be occupied by the SL PRS resource in the one slot; or
a fifth parameter, used for indicating a quantity of symbols allowed to be occupied by the SL PRS resource in the one slot.

22. The terminal device according to claim 21, wherein the resource pool comprises a first slot and a second slot, the first slot and the second slot have different time domain lengths, the first slot corresponds to a first value of the fourth parameter, the second slot corresponds to a second value of the fourth parameter, and the first value is different from the second value.

23. The terminal device according to claim 21 or 22, wherein
a plurality of the start symbols are allowed in the one slot, the plurality of start symbols comprise a first symbol and a second symbol that are adjacent in time domain position, and an SL PRS resource corresponding to the first symbol comprises the first symbol and all symbols between the first symbol and the second symbol in time domain; or
a plurality of the start symbols are allowed in the one slot, a last start symbol in the plurality of start symbols is a third symbol, a last symbol in symbols allowed to be used for SL PRS transmission in the one slot is a fourth symbol, and an SL PRS resource corresponding to the third symbol occupies the third symbol, the fourth symbol, and all symbols between the third symbol and the fourth symbol in time domain.

24. The terminal device according to claim 23, wherein a target symbol in the one slot comprises one or more of following:
a symbol for automatic gain control in the one slot;
a symbol for transmit/receive switching in the one slot; or
a symbol used for indicating transmission of an SL PRS and occupied by a sidelink channel in the slot,
wherein the target symbol is a symbol allowed to be used for SL PRS transmission in the one slot or a symbol occupied by the SL PRS resource in the one slot.

25. The terminal device according to any one of claims 21 to 24, wherein the fifth parameter is used for indicating a minimum value of the quantity of symbols allowed to be occupied by the SL PRS resource in the one slot.

26. The terminal device according to any one of claims 20 to 25, wherein one SL PRS resource in the resource pool occupies a plurality of consecutive symbols in time domain.

27. The terminal device according to any one of claims 20 to 26, wherein the comb size of the SL PRS resource in the resource pool meets one or more of following:
SL PRS resources in the resource pool have a same comb size;
SL PRS resources having different time domain start positions in the resource pool correspond to different comb sizes;
SL PRS resources having different time domain lengths in the resource pool correspond to different comb sizes; or
the comb size of the SL PRS resource in the resource pool is determined based on a quantity of symbols comprised in the SL PRS resource or a quantity of symbols that are comprised in the SL PRS resource and allowed to be used for SL PRS transmission.

28. The terminal device according to any one of claims 20 to 27, wherein the third parameter comprises one or more of following:
a sixth parameter, used for indicating an index of a start resource element RE allowed to be occupied by the SL PRS resource in the resource pool; or
a seventh parameter, used for indicating an RE gap between adjacent SL PRS resources in the resource pool.

29. The terminal device according to claim 28, wherein the index of the RE indicated by the sixth parameter is any value in a value range corresponding to the comb size.

30. The terminal device according to claim 28 or 29, wherein the resource pool comprises a first SL PRS resource and a second SL PRS resource, and in a case that the first SL PRS resource and the second SL PRS resource are allowed to have different comb sizes, the sixth parameter comprises parameters respectively corresponding to the first SL PRS resource and the second SL PRS resource; and
the first SL PRS resource and the second SL PRS resource comprise different quantities of symbols, or the first SL PRS resource and the second SL PRS resource have different start symbols in one slot of the resource pool.

31. The terminal device according to any one of claims 19 to 30, wherein
in a case that the resource pool is a first-type resource pool, the first configuration information comprises a parameter indicating a time domain position allowed to be occupied by an SL PRS resource in one slot of the resource pool; or
in a case that the resource pool is a second-type resource pool, one SL PRS of the resource pool occupies all resources of time domain resources allowed to be used for SL PRS transmission in one slot.

32. The terminal device according to claim 31, wherein
the first-type resource pool is a resource pool for performing channel sensing based on first measurement information, and the second-type resource pool is a resource pool for performing channel sensing based on second measurement information; and
the first measurement information is measurement information for a PSCCH DMRS, and the second measurement information is measurement information for a PSSCH DMRS.

33. The terminal device according to any one of claims 19 to 32, wherein the terminal device further comprises:
the terminal device performs resource selection/reselection for the SL PRS resource in the resource pool based on the first configuration information.

34. The terminal device according to claim 33, wherein in a case that the resource pool supports that a bandwidth occupied by one SL PRS resource is less than or equal to a first bandwidth, the resource selection/reselection is performed further based on one or more of following parameters:
an eighth parameter, used for indicating an index of a 1^{st} frequency domain unit of the SL PRS resource in the resource pool; or
a ninth parameter, used for indicating a quantity of frequency domain units comprised in an SL PRS selected by the terminal device,
wherein the first bandwidth is a total bandwidth occupied by all resource blocks allowed to be used for SL PRS transmission in the resource pool.

35. The terminal device according to claim 34, wherein the ninth parameter is used for indicating a minimum value of the quantity of the frequency domain units.

36. The terminal device according to any one of claims 19 to 35, wherein the resource pool comprises one or more of following resource pool:
a resource pool occupying one sidelink BWP; or
a shared resource pool between sidelink communications.

37. A terminal device, comprising a transceiver, a memory, and a processor, wherein the memory is configured to store a program, and the processor is configured to invoke the program in the memory and control the transceiver to receive or transmit a signal, to cause the terminal to execute the method according to any one of claims 1 to 18.

38. An apparatus, comprising a processor configured to invoke a program from a memory, to cause the apparatus to execute the method according to any one of claims 1 to 18.

39. A chip, comprising a processor, configured to invoke a program from a memory to cause a device installed with the chip to execute the method according to any one of claims 1 to 18.

40. A computer-readable storage medium, wherein the computer-readable storage medium stores a program, and the program causes a computer to execute the method according to any one of claims 1 to 18.

41. A computer program product, comprising a program that causes a computer to execute the method according to any one of claims 1 to 18.

42. A computer program, wherein the computer program causes a computer to execute the method according to any one of claims 1 to 18.
